# EUROPÄISCHE PATENTSCHRIFT

(11) **EP 2 123 523 B1**
(45) Veröffentlichungstag und Bekanntmachung des Hinweises auf die Patenterteilung: **20.08.2014**
(21) Anmeldenummer: 09100286.5
(22) Anmeldetag: 20.05.2009
(51) Int. Cl.: B60S 1/24, F16C 11/06

(54) **Kurbel für einen Wischerantrieb sowie Wischerantrieb**
Crank for a wiper drive and wiper drive
Manivelle pour un entraînement d'essuie-glace et entraînement d'essuie-glace

(30) Priorität: 21.05.2008 DE 102008001935
(43) Veröffentlichungstag der Anmeldung: 25.11.2009
(73) Patentinhaber: Robert Bosch GmbH, 70469 Stuttgart (DE)
(72) Erfinder: Trenkle, Lothar, 77833 Ottersweier (DE); Weiler, Michael, 77833 Ottersweier (DE)

(56) Entgegenhaltungen:
- DE-A1- 4 303 114
- DE-A1- 4 323 551
- DE-A1- 10 013 201
- FR-A1- 2 706 833
- US-A- 4 264 997
- US-A- 4 765 018
- US-A- 5 826 294

## Beschreibung

### Stand der Technik

Die Erfindung betrifft eine um eine Drehachse rotierbare Kurbel für einen Wischerantrieb gemäß dem Oberbegriff des Anspruchs 1 sowie einen Wischerantrieb gemäß Anspruch 12.

Das Antriebsdrehmoment für Wischerantriebe wird so ausgelegt, dass die Wischerarme unter schwierigsten Bedingungen (hoher Gummireibwert, hohe Wischerarmauflagekraft, größtes Getriebeübersetzungsverhältnis, Windlast) noch durchgezogen werden können. Aufgrund von Fertigungsstreuungen und Umwelteinflüssen, wie Temperatur und ggf. elektrische Spannung, ist das in der Praxis bei einigen Wischerantrieben maximal auftretende Antriebsdrehmoment etwa 50% höher als das minimale, einen störungsfreien Betrieb gewährleistende, Antriebsdrehmoment (Auslegungsmoment). Insbesondere diese hohen Antriebsdrehmomente erzeugen beim Blockieren des Wischergestänges in der Wendelage hohe Stangenkräfte im Getriebegestänge des Wischerantriebes, bedingt durch einen unvermeidbaren Kniehebeleffekt. Ein Blockieren des Gestänges in der Wendelage ist dabei in der Regel durch das Aufbauen von Schneekeilen bei Schneefall zurückzuführen. Je steifer der Wischerantrieb, genauer dessen Getriebegestänge, ausgelegt ist, desto höher wird die auf die Kurbel des Wischerantriebs wirkende Stangenkraft. In der Praxis treten dabei Kräfte bis etwa 2.500 N auf. Um eine Beschädigung des Wischerantriebes bei derartig hohen Stangenkräften zu vermeiden, ist es bekannt, die Kurbel (Motorkurbel) mit einem Federelement auszustatten, das mit einem Gelenkzapfen zum Festlegen des Wischergestänges derart zusammenwirkt, dass der Gelenkzapfen bei Überschreiten einer maximal zulässigen Kraftbelastung entgegen der Federkraft des Federelementes rotatorisch um eine Schwenkachse verschwenkt wird.

Eine derartige Kurbel nach dem Oberbegriff des Anspruchs 1 bei einem Wischerantrieb ist aus der US 4 264 997 A bekannt. Der Gelenkzapfen bei der bekannten Kurbel ist in einer kreisbogenförmig ausgebildeten Nut geführt. Nachteilig bei der bekannten Kurbel ist insbesondere aufgrund der kreisbogenförmig ausgebildeten Nut deren relativ großer Bauraum sowie die Eigenschaft, dass bei einer Einleitung von Kräften über das die Nut aufweisende Bauteil in die Achse des Wischerantriebs die Kräfte nicht fluchtend mit der Achse ausgerichtet sind, so dass auf das die Nut aufweisende Bauteil zusätzliche Biegemomente wirken.

### Offenbarung der Erfindung

### Technische Aufgabe

Der Erfindung liegt daher die Aufgabe zugrunde, eine Kurbel für einen Wischerantrieb nach dem Oberbegriff des Anspruchs 1 derart weiterzubilden, dass ein besonders kompakter Aufbau bei guten Festigkeitseigenschaften erzielt wird. Ferner besteht die Aufgabe darin, einen entsprechend optimierten Wischerantrieb, insbesondere einen Frontwischerantrieb, vorzuschlagen.

### Technische Lösung

Diese Aufgabe wird hinsichtlich der Kurbel (sog. Motorkurbel) für einen Wischerantrieb mit den Merkmalen des Anspruchs 1 und hinsichtlich des Wischerantriebes mit den Merkmalen des Anspruchs 12 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, den Kurbelaufbau dadurch zu vereinfachen, dass auf ein Schwenkgelenk zum Erzielen einer teilkreisförmigen Bewegungsbahn des Gelenkzapfens der Kurbel entgegen der Kraft der Feder verzichtet wird. Dies wird bei einer nach dem Konzept der Erfindung ausgebildeten, um eine Drehachse rotierbaren Kurbel dadurch gelöst, dass der Gelenkzapfen derart angeordnet, insbesondere geführt, ist, dass er entgegen der Kraft der Feder auf einer translatorischen Bahn aus der Betriebsposition in die Entlastungsposition verstellbar ist. Dabei hat der, vorzugsweise als Kugelzapfen ausgebildete, Gelenkzapfen in der Entlastungsposition bevorzugt einen geringeren Abstand zur (gedachten) Drehachse der Kurbel als in der Betriebsposition. Nach der vorliegenden Erfindung läuft die translatorische Bewegungsbahn in Bezug auf die Drehachse der rotierbar antreibbaren Kurbel in radialer Richtung. Durch die Realisierung einer, insbesondere geführten, translatorischen Bewegung des Gelenkzapfens kann auf ein gegen Verschmutzung und/oder Korrosion vergleichsweise anfälliges Schwenkgelenk verzichtet werden. Darüber hinaus ist es möglich, wie später noch erläutert werden wird, den Gelenkzapfen in eine Kurbelplatte zu integrieren, in der gleichzeitig auch die von der Drehachse der Kurbel durchsetzte Aufnahmeöffnung zum Festlegen der Kurbelplatte an einer Abtriebswelle einer AntriebsGetriebe-Einheit eingebracht ist. Insgesamt wird durch die Realisierung einer ausschließlich translatorischen Verstellbewegung des Gelenkzapfens eine besonders robuste und einfach aufgebaute überlastgesicherte Kurbel für einen Wischerantrieb erhalten.

In Weiterbildung der Erfindung ist mit Vorteil vorgesehen, dass die Feder, die einer Verstellbewegung des Gelenkzapfens aus der Betriebsposition in die Entlastungsposition entgegenwirkt, als Druckfeder ausgebildet ist, die derart angeordnet ist, dass sie den Gelenkzapfen in die Betriebsposition drückt. Auf diese Weise ist es möglich, die Feder raumsparend in einem Bereich radial zwischen der Drehachse und dem Gelenkzapfen anzuordnen. Beispielsweise kann die Feder derart ausgelegt werden, dass eine Verstellbewegung des Gelenkzapfens von der Betriebsposition in die Entlastungsposition bei einer Kraftbelastung von etwa 1.000 N und mehr resultiert.

Im Hinblick auf die konkrete Ausbildung der Feder gibt es unterschiedliche Möglichkeiten. So ist es beispielsweise denkbar, die Feder als Schenkelfeder oder als Schraubenfeder auszubilden. Im Falle des Vorsehens einer Schenkelfeder ist es bevorzugt, wenn sich ein Anlenkpunkt zum Festlegen der Schenkelfeder an einer Kurbelplatte der Kurbel in einem Bereich radial zwischen dem Gelenkzapfen und dem Kugelzapfen befindet. Die Ausbildung der Feder als Schraubenfeder, insbesondere als Schraubendruckfeder, ist von besonderem Vorteil, da eine derartige Feder derart anordenbar ist, dass sie eine Kurbelplatte der Kurbel umfangsseitig nicht überragt, wodurch der Bauraumbedarf der Kurbel auf ein Minimum reduziert wird.

In Weiterbildung der Erfindung ist mit Vorteil vorgesehen, dass der Gelenkzapfen in einem geraden Langloch geführt ist. Dabei dient das Langloch als Führungskulisse zur Realisierung einer translatorischen Verstellbewegung des Gelenkzapfens zwischen der Betriebs- und der Entlastungsposition.

Im Hinblick auf die Begrenzung der Verstellbewegung des Gelenkzapfens entgegen der Federkraft der Feder ist in Weiterbildung der Erfindung ein Anschlag vorgesehen, wobei der Anschlag vorzugsweise entweder von einem der Drehachse der Kurbel zugewandten Endbereich des Langlochs oder von einem, in das Langloch hineinragenden Fortsatzes gebildet ist, wobei es sich bei dem Fortsatz bevorzugt um einen Fortsatz einer das Langloch aufnehmenden Kurbelplatte handelt, der einstückig mit der Kurbelplatte oder als separates Bauteil ausgebildet sein kann. Dabei definiert der Anschlag die Entlastungsposition, in die der Gelenkzapfen bei Überlast hinein verschoben wird.

Von besonderem Vorteil ist eine Ausführungsform, bei der im Falle der Ausbildung des Anschlags als Fortsatz, der Fortsatz gleichzeitig zur Führung der dann insbesondere als Schraubendruckfeder ausgebildeten Feder dient. Anders ausgedrückt ragt der Fortsatz in die Feder hinein, vorzugsweise in eine Richtung, die mit der Bewegungsachse des Gelenkzapfens fluchtet.

Bevorzugt ist der Gelenkzapfen gegen ein Verdrehen im Langloch gesichert. Hierzu kann der Gelenkzapfen vorzugsweise mit einer Schlüsselweite, d. h. mit zwei zueinander parallelen Seitenflächen, versehen werden, die mit den Längsseiten des Langlochs zusammenwirken.

Um einen sicheren Halt des Gelenkzapfens an der das Langloch aufweisenden Kurbelplatte zu gewährleisten, ist eine Ausführungsform bevorzugt, bei der die Kurbelplatte sandwichartig zwischen zwei Plattenelementen aufgenommen ist, wobei die Plattenelemente, insbesondere formschlüssig, an dem Gelenkzapfen festgelegt sind. Die Plattenelemente sind dabei vorzugsweise derart ausgebildet, dass sie das Langloch seitlich überragen, damit der Gelenkzapfen unverlierbar an der Kurbelplatte gehalten ist. Bei einer Verstellbewegung des Gelenkzapfens werden bei einer derartigen Ausführungsform die Plattenelemente zusammen mit dem Gelenkzapfen verstellt. Je größer die Flächenerstreckung der scheibenförmigen Plattenelemente ist, desto besser ist die Abstützung des Gelenkzapfens bei Querbeanspruchung und desto kleiner ist die Flächenpressung und damit der Verschleiß. Insbesondere wird durch eine großflächige Ausbildung der Plattenelemente die Spielzunahme über die Lebenszeit minimiert. Im Falle der Ausbildung der Feder als Schenkelfeder ist eine Ausführungsform bevorzugt, bei der in einem der Plattenelemente, insbesondere in das obere Plattenelement, eine Bohrung zur Federeinhängung vorgesehen ist.

Von besonderem Vorteil ist eine Ausführungsform der Kurbel, bei der zumindest eines der Plattenelemente gegen Verdrehen relativ zu dem Gelenkzapfen gesichert ist. Dies kann auf einfache Weise dadurch realisiert werden, dass in dem entsprechenden Plattenelement eine Schlüsselweite (zwei Parallelflächen) eingebracht ist, die mit einer den Gelenkzapfen im Langloch gegen Verdrehen sichernden Schlüsselweite sichernd zusammenwirkt.

Von besonderem Vorteil ist eine Ausführungsform der Kurbel, bei der die Plattenelemente gleichzeitig eine Federaufnahme begrenzen, in die die, vorzugsweise als Schraubendruckfeder ausgebildete Feder hineinragt. Auf diese Weise wird ein Ablösen der sich am Gelenkzapfen abstützenden Feder sicher vermieden. Die Federaufnahme kann beispielsweise dadurch gebildet werden, dass zumindest eines der Plattenelemente im Randbereich gekröpft (erweitert, gestuft) ausgebildet ist. Dies ist insbesondere dann von Vorteil, wenn die Feder zur Realisierung einer definierten, entsprechend großen Federkraft mit einem vergleichsweise großen Durchmesser ausgebildet werden muss. Die Kröpfung kann in diesem Fall gleichzeitig als Anschlag für die Feder dienen.

Im Hinblick auf eine erleichterte Montage einer als Schraubendruckfeder ausgebildeten Feder ist eine Ausführungsform bevorzugt, bei der eines der Plattenelemente, vorzugsweise ein unteres Plattenelement, quer zur Flächenerstreckung geschlitzt ausgebildet ist, um eine Montagehilfe senkrecht zur Verstellrichtung des Gelenkzapfens aus einem den Gelenkzapfen führenden Langloch entfernen zu können, ohne dass die Gefahr besteht, die Feder mit aus dem Langloch herauszuziehen.

In Weiterbildung der Erfindung ist mit Vorteil vorgesehen, dass der Radius, auf dem der Gelenkzapfen in seiner Betriebsposition um die Drehachse rotierbar ist, einstellbar ist. Hierzu kann beispielsweise eine, insbesondere in die Kurbelplatte verschraubbare, Madenschraube vorgesehen werden, die gleichzeitig einen die Betriebsposition definierenden Anschlag für den Gelenkzapfen bildet.

Die Erfindung führt auch auf einen Wischerantrieb mit einer zuvor beschriebenen, optimierten Kurbel. Der Wischerantrieb umfasst dabei einen elektromotorischen Antriebsmotor, der entweder direkt über ein, vorzugsweise als Schneckengetriebe ausgebildetes, Getriebe eine Abtriebswelle antreibt, die drehfest mit der Kurbel, insbesondere mit einer Kurbelplatte der Kurbel, verbindbar ist. Durch Rotation der Kurbel um die Drehachse wird mindestens eine Wischerwelle, die über ein Gestänge mit dem Gelenkzapfen der Kurbel verbunden ist, pendelnd angetrieben.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1a:: eine teilgeschnittene Ansicht einer um eine Drehachse rotierbaren Kurbelplatte für einen Wischerantrieb,
- Fig. 1b:: eine um 90° gedrehte Ansicht der Kurbel gemäß Fig. 1a,
- Fig. 1c:: eine entlang der Schnittlinie A-A gemäß Fig. 1a geschnittene Ansicht eines in einem Langloch einer Kurbelplatte der Kurbel aufgenommenen Gelenkzapfens,
- Fig. 1d:: eine Draufsicht auf die Kurbelplatte der Kurbel gemäß den Fig. 1a bis 1c,
- Fig. 2a:: einen Gelenkzapfen mit zwei daran festgelegten Plattenelementen,
- Fig. 2b:: ein oberes Plattenelement der Plattenelemente gemäß Fig. 2a,
- Fig. 2c:: ein unteres Plattenelement der Plattenelemente gemäß Fig. 2a,
- Fig. 2d:: ein unteres Plattenelement der Plattenelemente gemäß Fig. 2a,
- Fig. 3:: eine teilgeschnittene Ansicht einer alternativen Ausführungsform einer Kurbel mit einstellbarem Gelenkzapfenrotationsradius,
- Fig. 4a:: eine alternative Ausführungsform einer Kurbel mit einer als Schraubendruckfeder ausgebildeten Feder,
- Fig. 4b:: eine geschnittene Ansicht der Kurbel entlang der Schnittlinie A-A gemäß Fig. 4a,
- Fig. 5a bis Fig. 5c:: unterschiedliche Verfahrensschritte eines Montageverfahrens zur Montage der in den Fig. 4a und 4b gezeigten Kurbel,
- Fig. 6a:: ein alternatives Ausführungsbeispiel einer Kurbel mit gekröpften Plattenelementen und
- Fig. 6b:: eine geschnittene Ansicht der Kurbel entlang der Schnittlinie B-B gemäß Fig. 6a.

### Ausführungsformen der Erfindung

In den Figuren sind gleiche Bauteile und Bauteile mit der gleichen Funktion mit den gleichen Bezugszeichen gekennzeichnet.

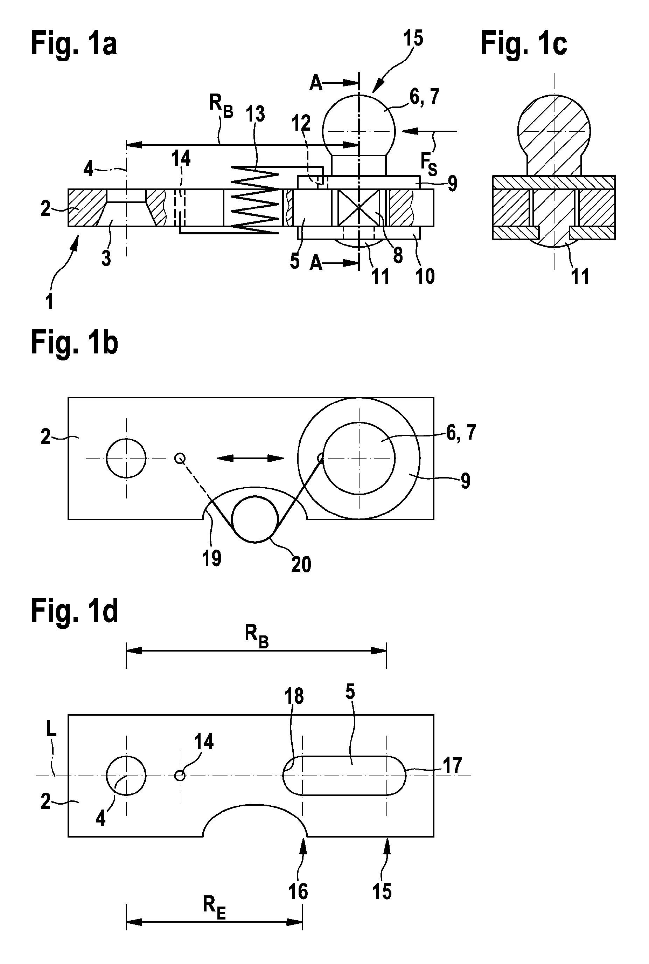

In Fig. 1a ist eine teilgeschnittene Ansicht einer Kurbel 1 für einen Wischerantrieb gezeigt. Die Kurbel 1 umfasst eine rechteckig konturierte Kurbelplatte 2, in der eine teilweise konisch ausgeformte Aufnahmebohrung 3 zum Festlegen der Kurbel 1 an einer nicht gezeigten Abtriebswelle einer Antriebs-Getriebe-Einheit eingebracht ist. Eine gedachte Drehachse 4, um die die Kurbel 1 mittels der Getriebe-Antriebs-Einheit rotierbar ist, verläuft zentrisch durch die Aufnahmebohrung 3.

In die Kurbelplatte 2 ist mit Radialabstand zur Drehachse 4 ein Langloch 5 eingebracht (vgl. Fig. 1d). Das Langloch 5 wird in Richtung der Dickenerstreckung der Kurbelplatte 2 von einem als Kugelzapfen ausgebildeten Gelenkzapfen 6 durchsetzt. Der Gelenkzapfen 6 umfasst einen teilkugelförmigen Gelenkkopf 7 und einen sich parallel zur Drehachse 4 erstreckenden Bolzenabschnitt 8. Der Bolzenabschnitt 8 durchsetzt ein oberes und ein unteres Plattenelement 9, 10, wobei die Plattenelemente 9, 10 die Kurbelplatte 2 abschnittsweise sandwichartig zwischen sich aufnehmen. Das untere Plattenelement 10 ist durch Vertaumeln des freien Endes 11 (Taumelniet) des Bolzenabschnittes 8 am Bolzenabschnitt 8 gesichert. In das obere Plattenelement 9 ist eine Bohrung 12 eingebracht, in die eine als Schenkelfeder ausgebildete Feder 13 von oben mit einem freien Ende eingehängt ist. Mit dem anderen freien Ende ist die als Schenkelfeder ausgebildete Feder 13 von unten in einer weiteren, in der Kurbelplatte 2 eingebrachten Bohrung 14 eingehängt. Wie sich aus Fig. 1d ergibt, befindet sich die Bohrung 14 zum Einhängen der Feder 13 in einem Bereich radial zwischen dem Langloch 5 und der Drehachse 4. Aus den Fig. 1b und 1d wird deutlich, dass seitlich in der Kurbelplatte 2 eine bogenförmige, randseitig offene Aussparung 19 vorgesehen ist, in der ein schraubenförmig gewickelter Abschnitt 20 der Feder 13 aufgenommen ist. Von diesem Abschnitt 20 erstrecken sich die beiden Schenkel der Feder 13 in Richtung der Bohrungen 12, 14. Die Feder 13 ist als Druckfeder ausgebildet und drückt den Gelenkzapfen 6 in der Zeichnungsebene nach rechts in die gezeigte Betriebsposition 15. In dieser ist eine Längsmittelachse des Gelenkzapfens 6 in einem Betriebspositionsradius R_{B} von der Drehachse 4 beabstandet. Überschreitet eine auf den Gelenkzapfen 6 wirkende Stangenkraft einen definierten Wert von beispielsweise etwa 1.000 N, so wird der Gelenkzapfen 6, geführt von dem Langloch 5, ausschließlich translatorisch entgegen der Federkraft der Feder 13 aus der Betriebsposition 15 in eine in Fig. 1d angedeutete Entlastungsposition 16 verstellt, in der der Abstand zwischen dem Gelenkzapfen 6 und der Drehachse 4 im Vergleich zur Betriebsposition 15 verringert ist. Der Radius R_{E} (R_{E} < R_{B}), um den sich der Gelenkzapfen 6 in der Entlastungsposition 16 um die Drehachse 4 bewegt, ist in Fig. 1d eingezeichnet.

Die Betriebsposition 15 ist, wie sich aus Fig. 1d ergibt, definiert durch einen äußeren Anschlag 17, der von einem bogenförmigen Schmalseitenabschnitt des Langlochs 5 gebildet ist. Die Entlastungsposition 16 ist definiert durch einen radial inneren Anschlag 18, der ebenfalls von einer bogenförmigen Schmalseite des Langlochs 5 gebildet ist, die dem äußeren Anschlag 17 radial innen in Bezug auf die Drehachse 4 gegenüber liegt. Der Bolzenabschnitt 8 ist auf Höhe der Anschläge 17, 18 zur Verschleißminimierung formkongruent zu den gekrümmten Anschlägen 17, 18 ausgeformt.

Wie sich weiter aus Fig. 1d ergibt, fluchtet der Verstellweg des Gelenkzapfens 6, also die Längserstreckung des Langlochs 5, mit einer die Drehachse 4 schneidenden Radiuslinie L.

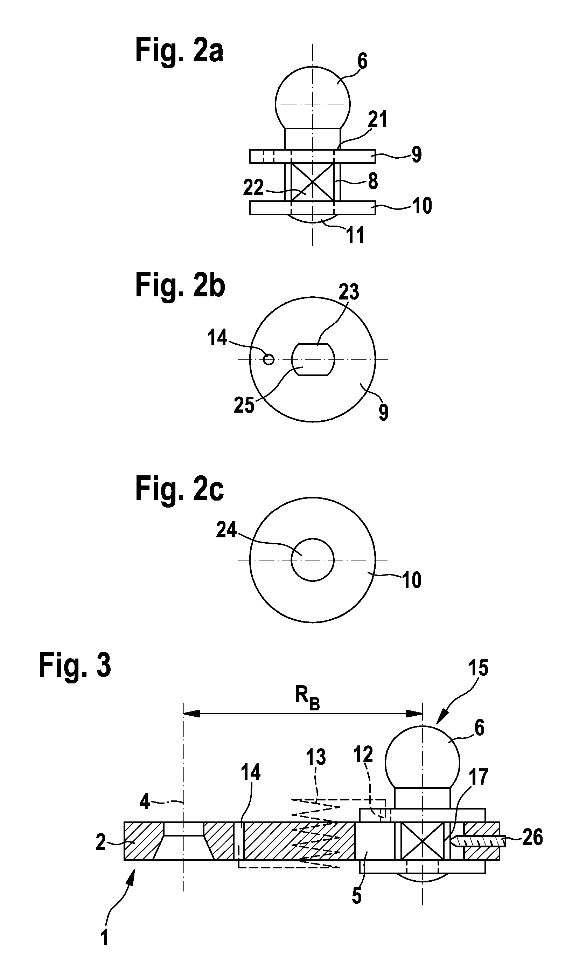

In den Fig. 2a bis 2c ist die in Fig. 1c dargestellte Einheit, bestehend aus dem Gelenkzapfen 6 sowie den Plattenelementen 9, 10 im Detail dargestellt, wobei das obere Plattenelement 9 in Fig. 2b in einer in Bezug auf Fig. 2a um 90° gedrehten Ansicht und das untere Plattenelement 10 in Fig. 2c ebenfalls in einer um 90° gedrehten Ansicht gezeigt sind. Zu erkennen ist, dass in einem oberen Bereich des Bolzenabschnitts 8 ein Axialanschlag 21 für das obere, scheibenförmige Plattenelement 9 vorgesehen ist. Am Außenumfang des Bolzenabschnittes 8 ist ein Schlüsselflächenpaar (Parallelflächen) eingebracht, von dem lediglich eine in der Zeichnungsebene vordere Schlüsselfläche 22 zu erkennen ist. Der Abstand der parallelen Schlüsselflächen des Schlüsselflächenpaares ist so gewählt, dass der Gelenkzapfen 6 gegen ein Verdrehen in dem beispielsweise in Fig. 1d gezeigten Langloch 5 gesichert ist. Mit dem äußeren Schlüsselflächenpaar des Bolzenabschnittes 8 wirkt ein weiteres inneres, vom Umfang einer Öffnung 25 gebildetes, Schlüsselflächenpaar 23 in dem oberen Plattenelement 9 als Verdrehsicherung zusammen.

In dem unteren Plattenelement 10 ist eine kreisförmig konturierte Öffnung 24 eingebracht, dessen Durchmesser geringer ist, als der Durchmesser der als Langloch ausgebildeten Öffnung 25 im oberen Plattenelement 9. Im montierten Zustand wird die Öffnung 24 im unteren Plattenelement 10 durchsetzt von einem unteren Abschnitt des Bolzenabschnittes 8, wobei das aus der Öffnung 24 unten herausragende freie Ende 11 durch Vertaumeln derart verbreitert ist, dass es eine Sicherung gegen axiales Abschieben des unteren Plattenelementes 10 von dem Bolzenabschnitt 8 dient.

In Fig. 2b ist die Bohrung 14 zum Festlegen der Feder 13 gezeigt, wobei sich die Bohrung 14 radial zwischen dem Umfangsrand des oberen Plattenelementes 9 und dem Innenumfang der Öffnung 25 befindet. Entgegen den in den Fig. 2a bis 2c dargestellten, kreisförmigen Außengeometrien der Plattenelemente 9, 10, können diese, zumindest zum Teil, alternativ auch rechteckig ausgeformt werden. Bevorzugt ist die Flächenerstreckung der Plattenelemente 9, 10 maximiert, um eine optimale Abstützung des Gelenkzapfens 6 an der Kurbelplatte 2 zu gewährleisten. Wie sich aus Fig. 1b ergibt, entspricht der Durchmesser der Plattenelemente 9, 10 zur Maximierung der Flächenerstreckung der Plattenelemente 9, 10 der Schmalseitenerstreckung der Kurbelplatte 2.

Das in Fig. 3 dargestellte Ausführungsbeispiel einer Kurbel 1 entspricht im Wesentlichen dem zuvor beschriebenen Ausführungsbeispiel, so dass zur Vermeidung von Wiederholungen im Folgenden im Wesentlichen nur auf die Unterschiede zu dem zuvor beschriebenen Ausführungsbeispiel eingegangen wird. Im Hinblick auf die Gemeinsamkeiten wird auf die Fig. 1a bis 2c und die zugehörige Figurenbeschreibung verwiesen.

Im Gegensatz zu dem zuvor beschriebenen Ausführungsbeispiel ist der radial äußere Anschlag 17 zur Definition der Betriebsposition 15 nicht gebildet von dem Umfangsrand des Langloches 5, sondern von der Stirnseite einer Madenschraube 26, die in das Langloch 5 hinein, von einer äußeren Stirnseite der Kurbelplatte 2 her, einschraubbar ist. Hierdurch ist der Betriebspositionsradius R_{B} des Gelenkzapfens 6 einstellbar.

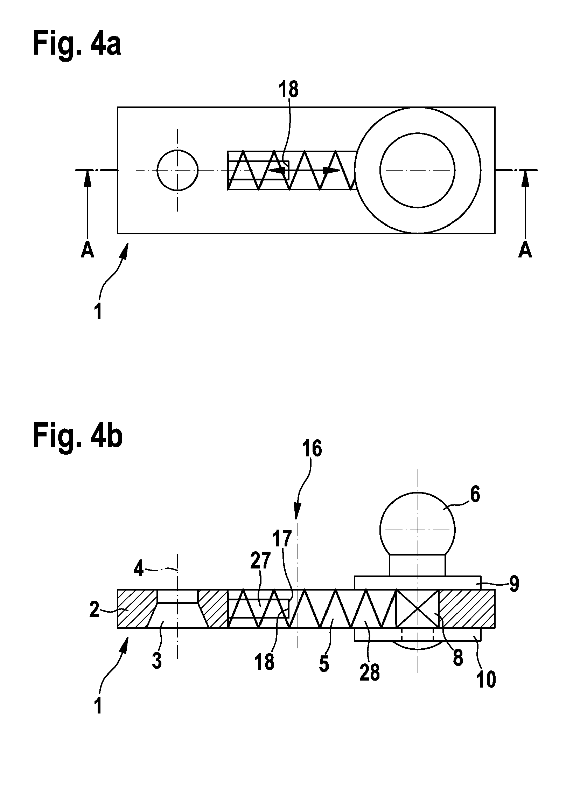

In den Fig. 4a und 4b ist ein weiteres alternatives Ausführungsbeispiel einer Kurbel 1 gezeigt. Zu erkennen ist die Kurbelplatte 2 mit der darin eingebrachten, abschnittsweise konischen, Aufnahmebohrung 3 sowie ein hierzu radial beabstandetes, in radialer Richtung verlaufendes Langloch 5 zur Führung des Gelenkzapfens 6. Dieser bildet, wie in den Fig. 2a bis 2c gezeigt, mit zwei Plattenelementen 9, 10 eine Funktions-Einheit, wobei auf eine Bohrung 14 im oberen Plattenelement 9 verzichtet werden kann, da die Feder 13 als Schraubenfeder, hier als Schraubendruckfeder, ausgebildet ist, wobei die Feder 13 im Langloch 5 aufgenommen ist. In radialer Richtung in Bezug auf die Drehachse 4 (axial in Bezug auf die Feder 13) erstreckt sich ein Fortsatz 27 in die Feder 13 hinein, und zwar von einem der Drehachse 4 zugewandten Ende des Langlochs 5 her. Die Entlastungsposition 16 wird definiert von einem in Bezug auf die Drehachse 4 radial inneren Anschlag 18, der in dem gezeigten Ausführungsbeispiel gebildet ist von der dem Gelenkzapfen 6 zugewandten Stirnseite des Fortsatzes 27. Die Feder 15 stützt sich einenends am Innenumfang des Langloches 5 und anderenends unmittelbar am Bolzenabschnitt 8 des Gelenkzapfens 6 ab. Dabei ragt die Feder 13 in Bezug auf die Drehachse 4 in radialer Richtung in einen von den Plattenelementen 9, 10 überspannten Bereich hinein, der als Federaufnahme 28 dient. Seitlich wird die Federaufnahme 28 von der inneren Umfangswand (Randbereich) des Langloches 5 begrenzt.

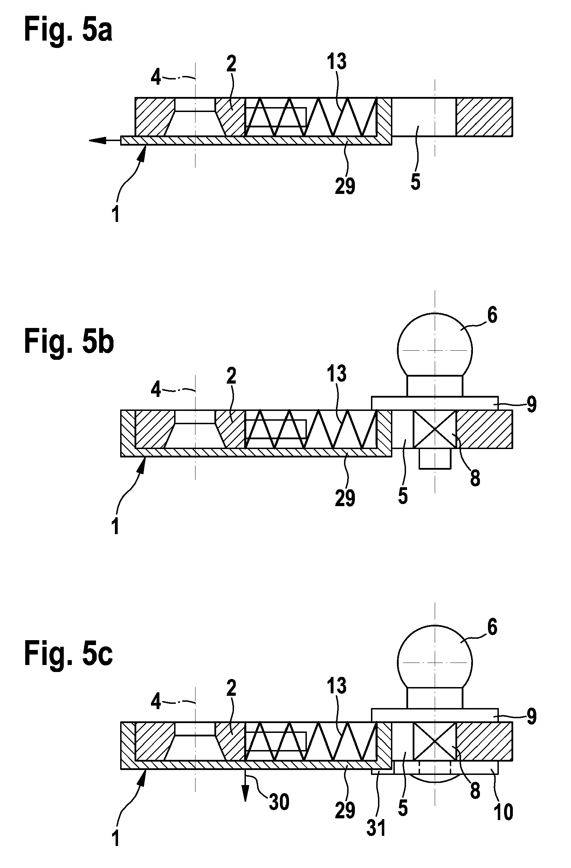

Im Folgenden wird anhand der Fig. 5a bis 5c ein bevorzugtes Montageverfahren zur Montage der in den Fig. 4a und 4b dargestellten Kurbel 1 beschrieben. Zunächst wird die Feder 13 in das Langloch 5 eingeführt und mit Hilfe einer L-förmigen Montagehilfe 29, an der sich die Feder 13 in radialer Richtung in Bezug auf die Drehachse 4 abstützt, in Richtung der Drehachse 4 komprimiert (zusammengepresst). Daraufhin wird das obere Plattenelement 9, wie sich aus Fig. 5b ergibt, zusammen mit dem Gelenkzapfen 6 von der Kurbelplattenoberseite her in das Langloch 5 gesteckt. Das untere Plattenelement 10 wird, wie sich aus Fig. 5c ergibt, durch Vertaumeln des unteren Abschnittes des Bolzenabschnittes 8 des Gelenkzapfens 6 mit dem unteren Plattenelement 10 vernietet, woraufhin die Montagehilfe 9 in eine senkrecht zur Kurbelplattenlängserstreckung verlaufende Richtung 30 in dem gezeigten Ausführungsbeispiel nach unten entfernt, wobei zum erleichterten Entfernen der Montagehilfe 29 das untere Plattenelement 10 in radialer Richtung nach außen offen geschlitzt, d. h. mit einem Schlitz 31 versehen ist, durch den die Montagehilfe 29 nach unten durchgeführt werden kann, wodurch ein versehentliches Herausziehen der Feder 13 vermieden wird. Die Breite des Schlitzes 31 ist dabei geringer als die Breite des Langloches 5.

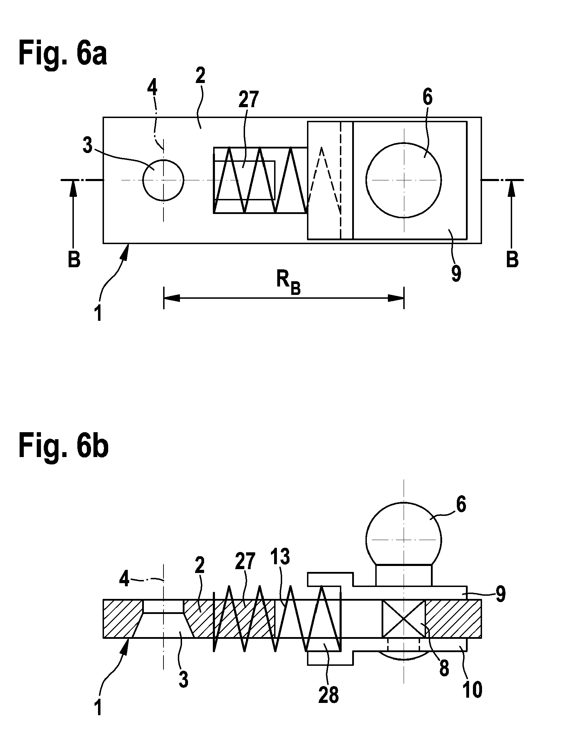

In den Fig. 6a und 6b ist ein weiteres alternatives Ausführungsbeispiel einer Kurbel 1 für einen Wischerantrieb gezeigt. Zu erkennen ist, dass der Durchmesser der als Schraubendruckfeder ausgebildeten Feder 13 größer ist als in dem Ausführungsbeispiel gemäß den Fig. 4a bis 4b. Die Plattenelemente 9, 10 sind zur Bildung einer Federaufnahme 28 gekröpft (gestuft) ausgebildet und dienen gleichzeitig als Anschlag für die Feder 13. Die Feder 13 stützt sich also nicht unmittelbar am Gelenkzapfen 6, bzw. am Bolzenabschnitt 8, sondern an den sich an dem Bolzenabschnitt 8 abstützenden Plattenelementen 9, 10 ab. Diese Plattenelemente 9, 10 sind, wie sich aus Fig. 6a ergibt, im Gegensatz zu den zuvor beschriebenen Ausführungsbeispielen nicht kreisrund, sondern rechteckig konturiert.

## Patentansprüche

1. Um eine Drehachse (4) rotierbare Kurbel (1) für einen Wischerantrieb, mit einem Gelenkzapfen (6) zum gelenkigen Anbinden eines Wischergestänges, wobei der Gelenkzapfen (6) entgegen der Federkraft einer Feder (13) relativ zu der Drehachse (4) aus einer Betriebsposition (15) in eine Entlastungsposition (16) bewegbar ist,
**dadurch gekennzeichnet,**
**dass** der Gelenkzapfen (6) entgegen der Federkraft translatorisch verstellbar angeordnet ist, und dass der Gelenkzapfen (6) in Bezug auf die Drehachse (4) der Kurbel (1) in radialer Richtung bewegbar ist.

2. Kurbel nach Anspruch 1,
**dadurch gekennzeichnet,**
**dass** die Feder (13) eine der Bewegung des Gelenkzapfens (6) drückend entgegenwirkende Druckfeder ist.

3. Kurbel nach einem der Ansprüche 1 oder 2,
**dadurch gekennzeichnet,**
**dass** die Feder (13) als Schenkelfeder oder als Schraubenfeder ausgebildet ist.

4. Kurbel nach einem der vorhergehenden Ansprüche,
**dadurch gekennzeichnet,**
**dass** der Gelenkzapfen (6) in einem in einer Kurbelplatte (2) angeordneten Langloch (5) geführt ist.

5. Kurbel nach Anspruch 4
**dadurch gekennzeichnet,**
**dass** die Feder (13), zumindest abschnittsweise, vorzugsweise über ihre gesamte Längserstreckung, in dem Langloch (5) aufgenommen ist.

6. Kurbel nach einem der Ansprüche 4 oder 5,
**dadurch gekennzeichnet,**
**dass** ein, vorzugsweise von einem Rand des Langlochs (5) oder einem in das Langloch (5) hinein ragenden Fortsatz (27) gebildeter, die Entlastungsposition (16) definierender, Anschlag (18) vorgesehen ist.

7. Kurbel nach Anspruch 6,
**dadurch gekennzeichnet,**
**dass** der Fortsatz (27) in die Feder (13) hineinragend angeordnet ist.

8. Kurbel nach einem der Ansprüche 4 bis 7,
**dadurch gekennzeichnet,**
**dass** die Kurbelplatte (2) sandwichartig zwischen zwei zusammen mit dem Gelenkzapfen (6) verschiebbaren Plattenelementen (9, 10) aufgenommen ist.

9. Kurbel nach Anspruch 8,
**dadurch gekennzeichnet,**
**dass** der Gelenkzapfen (6) gegen ein Verdrehen im Langloch (5) gesichert ist und/oder dass zumindest eines der Plattenelemente (9, 10) gegen Verdrehen an dem Gelenkzapfen (6) gesichert ist.

10. Kurbel nach einem der Ansprüche 8 oder 9,
**dadurch gekennzeichnet,**
**dass** zumindest eines der Plattenelemente (9, 10) eine Federaufnahme (28) begrenzend ausgeformt, vorzugsweise gekröpft, ist.

11. Kurbel nach einem der vorhergehenden Ansprüche,
**dadurch gekennzeichnet,**
**dass** die Relativposition eines die Betriebsposition (15) definierenden Anschlags (17) zur Drehachse (4) der Kurbel (1) einstellbar ist.

12. Wischerantrieb, insbesondere Frontwischerantrieb, mit einer rotierend angetriebenen Kurbel (1) nach einem der vorhergehenden Ansprüche.

## Claims

1. Crank (1) which is rotatable about an axis of rotation (4) and is intended for a wiper drive, with a pivot pin (6) for the articulated connection of a wiper linkage, wherein the pivot pin (6) is movable relative to the axis of rotation (4) from an operating position (15) into a release position (16) counter to the spring force of a spring (13), **characterized in that** the pivot pin (6) is arranged so as to be displaceable in a translatory manner counter to the spring force, and **in that** the pivot pin (6) is movable in the radial direction with respect to the axis of rotation (4) of the crank (1).

2. Crank according to Claim 1, **characterized in that** the spring (13) is a compression spring opposing the movement of the pivot pin (6) in a pushing manner.

3. Crank according to either of Claims 1 and 2, **characterized in that** the spring (13) is designed as a leg spring or as a helical spring.

4. Crank according to one of the preceding claims, **characterized in that** the pivot pin (6) is guided in an elongated hole (5) arranged in a crank plate (2).

5. Crank according to Claim 4, **characterized in that** the spring (13), is accommodated, at least partially, preferably over the entire longitudinal extent thereof, in the elongated hole (5).

6. Crank according to either of Claims 4 and 5, **characterized in that** a stop (18) which is preferably formed by an edge of the elongated hole (5) or by an extension (27) projecting into the elongated hole (5) and which defines the release position (16) is provided.

7. Crank according to Claim 6, **characterized in that** the projection (27) is arranged projecting into the spring (13).

8. Crank according to one of Claims 4 to 7, **characterized in that** the crank plate (2) is accommodated in a sandwich-like manner between two plate elements (9, 10) which are displaceable together with the pivot pin (6).

9. Crank according to Claim 8, **characterized in that** the pivot pin (6) is secured against rotation in the elongated hole (5), and/or **in that** at least one of the plate elements (9, 10) is secured against rotation on the pivot pin (6).

10. Crank according to either of Claims 8 and 9, **characterized in that** at least one of the plate elements (9, 10) is formed, preferably bent, in a manner bounding a spring receptacle (28).

11. Crank according to one of the preceding claims, **characterized in that** the relative position of a stop (17) defining the operating position (15) relative to the axis of rotation (4) of the crank (1) is adjustable.

12. Wiper drive, in particular front wiper drive, with a rotatingly driven crank (1) according to one of the preceding claims.

## Revendications

1. Manivelle (1) pouvant tourner autour d'un axe de rotation (4) pour un entraînement d'essuie-glace, comprenant un boulon d'articulation (6) pour la liaison articulée d'une tringlerie d'essuie-glace, le boulon d'articulation (6) étant mobile à l'encontre de la force de ressort d'un ressort (13), par rapport à l'axe de rotation (4), à partir d'une position de fonctionnement (15) jusqu'à une position de détente (16),
**caractérisée**
**en ce que** le boulon d'articulation (6) est disposé de manière à pouvoir être déplacé en translation à l'encontre de la force de ressort, et en ce que le boulon d'articulation (6) est mobile dans la direction radiale par rapport à l'axe de rotation (4) de la manivelle (1).

2. Manivelle selon la revendication 1,
**caractérisée**
**en ce que** le ressort (13) est un ressort de compression s'opposant par pression au déplacement du boulon d'articulation (6).

3. Manivelle selon l'une quelconque des revendications 1 et 2,
**caractérisée**
**en ce que** le ressort (13) est réalisé sous forme de ressort à branches ou sous forme de ressort hélicoïdal.

4. Manivelle selon l'une quelconque des revendications précédentes,
**caractérisée**
**en ce que** le boulon d'articulation (6) est guidé dans un trou oblong (5) disposé dans une plaque de manivelle (2).

5. Manivelle selon la revendication 4,
**caractérisée**
**en ce que** le ressort (13) est reçu dans le trou oblong (5) au moins en partie, de préférence sur toute son étendue longitudinale.

6. Manivelle selon l'une quelconque des revendications 4 et 5,
**caractérisée**
**en ce qu'**il est prévu une butée (18) définissant la position de détente (16) et formée de préférence par un bord du trou oblong (5) ou par une saillie (27) pénétrant dans le trou oblong (5).

7. Manivelle selon la revendication 6,
**caractérisée**
**en ce que** la saillie (27) est disposée de manière à pénétrer dans le ressort (13).

8. Manivelle selon l'une quelconque des revendications 4 à 7,
**caractérisée**
**en ce que** la plaque de manivelle (2) est reçue à la manière d'un sandwich entre deux éléments de plaque (9, 10) pouvant être déplacés conjointement avec le boulon d'articulation (6).

9. Manivelle selon la revendication 8,
**caractérisée**
**en ce que** le boulon d'articulation (6) est bloqué en rotation dans le trou oblong (5) et/ou en ce qu'au moins l'un des éléments de plaque (9, 10) est bloqué en rotation sur le boulon d'articulation (6).

10. Manivelle selon l'une quelconque des revendications 8 et 9,
**caractérisée**
**en ce qu'**au moins l'un des éléments de plaque (9, 10) est formé, de préférence coudé, de manière à limiter un logement de ressort (28).

11. Manivelle selon l'une quelconque des revendications précédentes,
**caractérisée**
**en ce que** la position relative d'une butée (17) définissant la position de fonctionnement (15) par rapport à l'axe de rotation (4) de la manivelle (1) peut être réglée.

12. Entraînement d'essuie-glace, en particulier entraînement d'essuie-glace avant, comprenant une manivelle (1) entraînée en rotation selon l'une quelconque des revendications précédentes.
